# EUROPÄISCHE PATENTANMELDUNG

(11) **EP 2 098 672 A1**
(43) Veröffentlichungstag der Anmeldung: **09.09.2009**
(21) Anmeldenummer: 08102251.9
(22) Anmeldetag: 04.03.2008
(51) Int. Cl.: E05F 15/20, B60R 25/00, G07C 9/00

(54) **Kraftfahrzeug mit einem automatisch in eine Offen- und eine Schließstellung verstellbaren Fahrzeugteil**

(71) Anmelder: Hella KGaA Hueck & Co., 59552 Lippstadt (DE)
(72) Erfinder: Weghaus, Ludger, 59556, Lippstadt (DE); Reimann, Martin, 59071, Hamm (DE)

(57) **Zusammenfassung**

Ein Kraftfahrzeug (1) weist einen Antriebsmotor (17) und ein erstes Bedienelement (19) zum Starten und/oder Stoppen des Antriebsmotors (17) auf. Das Kraftfahrzeug (1) hat mindestens ein verstellbares Fahrzeugteil (2, 3), insbesondere einer Heckklappe oder einer Fahrzeugtüre. Zum automatischen Verstellen des Fahrzeugteils (2, 3) zwischen einer Offen- und einer Schließstellung ist eine Betätigungseinrichtung (20) vorgesehen. Mit Hilfe eines Näherungssensors (21) kann ein Teil eines Außenbereichs (23) des Kraftfahrzeugs (1) auf die Anwesenheit eines Körperteils (24) eines Benutzers überwacht werden. Eine mit dem Näherungssensor (21) und der Betätigungseinrichtung (20) verbundenen Steuereinrichtung (14) ist derart ausgestaltet, dass ein das Verstellen des Fahrzeugsteils (2, 3) auslösendes Betätigungssteuersignal erzeugt wird, wenn der Näherungssensor (21) die Anwesenheit des Körperteils (24) in dem Teil des Außenbereichs (23) detektiert. Das Kraftfahrzeug (1) weist mindestens ein zweites Bedienelement (25a, 25b) auf, das in eine Aktivierungs- und eine Deaktivierungsstellung bringbar ist. Das zweite Bedienelement (25a, 25b) steht derart mit der Steuereinrichtung (14) in Wirkverbindung, dass das Betätigungssteuersignal in der Deaktivierungsstellung gesperrt ist.

## Beschreibung

Die Erfindung betrifft ein Kraftfahrzeug mit einem Antriebsmotor und einem Bedienelement zum Starten und/oder Stoppen des Antriebsmotors, wie z.B. einem Zündschalter, mit mindestens einem in eine Offen- und eine Schließstellung verstellbaren Fahrzeugteil, insbesondere einer Heckklappe und/oder einer Fahrzeugtüre, mit einer Betätigungseinrichtung zum automatischen Verstellen des Fahrzeugteils zwischen der Offen- und der Schließstellung, mit einem Näherungssensor, der einen Teil eines Außenbereichs des Kraftfahrzeugs auf die Anwesenheit eines Körperteils eines Benutzers überwacht, und mit einer mit dem Näherungssensor und der Betätigungseinrichtung verbundenen Steuereinrichtung, die derart ausgestaltet ist, dass ein das Verstellen des Fahrzeugsteils auslösendes Betätigungssteuersignal erzeugt wird, wenn der Näherungssensor die Anwesenheit des Körperteils in dem Teil des Außenbereichs detektiert. Unter einem Fahrzeugteil wird insbesondere eine Schwenktüre, eine Flügeltüre, eine Schiebetüre, eine Frontklappe, eine Heckklappe und/oder ein Deckel verstanden.

Ein derartiges Kraftfahrzeug, das mehrere Türen und eine Heckklappe hat, ist aus DE 10 2004 0471 709 B3 bekannt. Die Heckklappe des Fahrzeugs hat eine Betätigungseinrichtung, mit der sie aufgrund eines Öffnungsbefehls aus ihrer Schließstellung automatisch in die Offenstellung verstellbar ist. Zum Empfangen eines Öffnungswunschs des Fahrzeugbenutzers hat das Kraftfahrzeug einen Näherungssensor, der im Heckbereich des Kraftfahrzeugs unterhalb eines Stoßfängers zwei Sensorelemente aufweist. Diese sind derart angeordnet, dass der Benutzer durch Schwenken des Fußes im Bereich zwischen Fahrzeugaufbau und Fahrbahnoberfläche den Näherungssensor berührungslos zum Schalten veranlassen kann. Der Näherungssensor und die Betätigungseinrichtung stehen derart mit der Steuereinrichtung in Wirkverbindung, dass ein den Öffnungsvorgang einleitendes Betätigungssteuersignal erzeugt wird, wenn der Näherungssensor schaltet und gleichzeitig eine im Kraftfahrzeug angeordnete Detektionseinrichtung das Vorhandensein eines vom Fahrzeugbenutzer mitführbaren Zugangsberechtigungsmittels, wie z.B. einer Smartcard oder eines intelligenten Fahrzeugschlüssels, in einem Umgebungsbereich des Kraftfahrzeugs detektiert. Ein Fahrzeugbenutzer, der aufgrund eines zu tragenden Gegenstands beide Hände belegt hat, kann also mit Hilfe des Näherungssensors den automatischen Öffnungsvorgang der Heckklappe einleiten, ohne den Gegenstand abstellen zu müssen. Um zu vermeiden, dass die Heckklappe auch bei fahrendem Fahrzeug automatisch öffnet, ist die Erzeugung des den Öffnungsvorgang einleitenden Betätigungssteuersignals ist nur bei stehendem Fahrzeug und ausgeschalteter Zündung möglich. In der Praxis hat sich jedoch gezeigt, dass dennoch Fehlfunktionen auftreten können, aufgrund derer die Heckklappe automatisch geöffnet wird, ohne dass der Benutzer des Kraftfahrzeugs dies wünscht. So kann es beispielsweise passieren, dass sich die Heckklappe automatisch öffnet, wenn die Anwesenheit des Zugangsberechtigungsmittel in dem Umgebungsbereich feststellt wird und sich im Überwachungsbereich des Näherungssensors ein Tier bewegt, das den Näherungssensor auslöst. Auch kann es passieren, dass der Fahrzeugbenutzer die Heckklappe versehentlich selbst öffnet, wenn er beispielsweise das Heck des Fahrzeugs mit einem Hochdruckreiniger absprüht. Derartige Fehlfunktionen werden von den Fahrzeugbenutzern als störend empfunden.

Es besteht deshalb die Aufgabe ein Kraftfahrzeug der eingangs genannten Art zu schaffen, bei dem Fehlfunktionen beim automatischen Betätigen des Fahrzeugteils weitestgehend vermieden werden.

Diese Aufgabe wird dadurch gelöst, dass das Kraftfahrzeug zusätzlich zu dem ersten Bedienelement mindestens ein zweites Bedienelement aufweist, das in eine Aktivierungs-und eine Deaktivierungsstellung bringbar ist, und dass das zweite Bedienelement derart mit der Steuereinrichtung in Wirkverbindung steht, dass das Betätigungssteuersignal in der Deaktivierungsstellung gesperrt ist.

In vorteilhafter Weise hat der Benutzer des Kraftfahrzeugs also die Möglichkeit, durch Betätigen des zweiten Bedienelements das automatische Öffnen und/oder Schließen des Fahrzeugteils unabhängig vom Betriebszustand des Antriebsmotors zu deaktivieren, um ein unbeabsichtigtes Betätigen des Fahrzeugteils zu vermeiden. So kann er beispielsweise das automatische Öffnen einer Heckklappe sperren, während das Kraftfahrzeug in einer Waschanlage gereinigt wird.

Bei einer vorteilhaften Ausgestaltung der Erfindung ist das zweite Bedienelement im Innenraum des Kraftfahrzeugs, vorzugsweise an einem Fahrerplatz angeordnet. Dabei kann das zweite Bedienelement einen Taster oder Schalter aufweisen und an einer Armaturentafel des Kraftfahrzeugs angeordnet sein. Es ist aber auch denkbar, dass das Bedienelement einen Bordmonitor (z.B. Touchscreen) und ggf. einen zentralen Drehknopf, einen Joystick, einen Trackball, eine Maus oder dergleichen Positioniereinrichtung für einen auf dem Bordmonitor angezeigten Lichtzeiger umfasst, über den das automatische Betätigen des Fahrzeugteils softwaremäßig deaktivierbar ist.

Bei einer bevorzugten Ausführungsform der Erfindung weist das zweite Bedienelement an einer mobilen Bedieneinheit einer Fernbedienung eine Taste, einen Schalter oder dergleichen Betätigungsteil auf, das drahtlos mit der Steuereinrichtung in Übertragungsverbindung steht. Dabei kann Bedieneinheit als Funkfernbedienung und/oder als elektronischer Fahrzeugschlüssel ausgestaltet sein. Gegebenenfalls ist es sogar möglich, dass das Kraftfahrzeug mehrere dieser Fahrzeugschlüssel aufweist, von denen jeweils einer aktivierbar ist. Die den Fahrzeugschlüsseln zugeordneten zweiten Bedienelemente können bevorzugt unabhängig voneinander in die Aktivierungs- bzw. Deaktivierungsstellung gebracht werden, wobei nur das zweite Bedienelement des jeweils aktiven Fahrzeugschlüssels mit der Steuereinrichtung in Wirkverbindung steht. Es ist aber auch denkbar, dass das Sperren des automatischen Verstellens des Fahrzeugteils auf die Bedienelement aller Fahrzeugschlüssel wirkt.

Vorteilhaft ist, wenn das zweite Bedienelement mindestens zwei Tasten aufweist und durch gleichzeitiges Drücken dieser Tasten zwischen der Aktivierungsstellung und der Deaktivierungsstellung umschaltbar ist, und wenn durch Betätigen jeweils einer dieser Tasten eine der betreffenden Taste zugeordnete weitere Funktion des Kraftfahrzeugs auslösbar ist. Die einzelnen Tasten können also auch für mehrere Funktionen genutzt werden, wobei die einzelnen Funktionen durch unterschiedliches Betätigen der Tasten bzw. Tastenkombinationen auslösbar sind. Das Bedienelement ermöglich dadurch einen einfache Aufbau und kompakte Abmessungen.

Zweckmäßigerweise ist das in der Aktivierungsstellung befindliche zweite Bedienelement dadurch zwischen der Aktivierungsstellung und der Deaktivierungsstellung umschaltbar, dass eine Taste innerhalb eines vorgegebenen Zeitfensters mindestens zwei mal betätigt wird, wobei die Dauer des Zeitfensters insbesondere zwischen 0,3 s und 3 s, gegebenenfalls zwischen 0,3 s und 2 s und bevorzugt zwischen 0,3 s und 1 s beträgt. Auch diese Maßnahme ermöglicht eine Belegung der Taste mit mehreren Funktionen. So ist es beispielsweise denkbar, dass durch einmaliges Betätigen der Taste in dem Zeitfenster nach Beendigung des Zeitfensters der automatische Öffnungs- und/oder Schließvorgang des Fahrzeugteils in Gang gesetzt wird und durch mehrmaliges Betätigen der Taste in dem Zeitfenster die Betätigungseinrichtung zwischen der Aktivierungs- und der Deaktivierungsstellung umgeschaltet wird.

Bei einer anderen Ausgestaltung der Erfindung ist das in der Aktivierungsstellung befindliche zweite Bedienelement dadurch in die Deaktivierungsstellung bringbar, dass mindestens eine Taste zumindest während einer vorbestimmten Mindestdauer betätigt wird, wobei die Mindestdauer insbesondere 1 s, gegebenenfalls 2 s und bevorzugt 3 s beträgt. So ist es beispielsweise denkbar, dass durch ein kurzes Betätigen der Taste der automatische Öffnungs- und/oder Schließvorgang des Fahrzeugteils ausgelöst wird und durch längeres Betätigen der Taste die Betätigungseinrichtung zwischen der Aktivierungs-und der Deaktivierungsstellung umschaltbar ist. Durch die relativ lange Mindestdauer wird ein versehentliches Deaktivieren des Näherungssensors weitestgehend vermieden.

Vorteilhaft ist, wenn das zweite Bedienelement einen Zeitgeber aufweist und derart ausgestaltet ist, dass es nach einem manuellen Umschalten in die Deaktivierungsstellung nach einer vorbestimmten Zeitdauer automatisch in die Aktivierungsstellung zurückschaltet. Dabei kann die Zeitdauer fest vorgegeben oder programmierbar sein. Es ist aber auch denkbar, dass das in Deaktivierungsstellung befindliche Bedienelement durch erneutes Betätigen in die Aktivierungsstellung umschaltbar ist.

Bei einer bevorzugten Ausführungsform der Erfindung steht das zweite Bedienelement derart mit dem ersten Bedienelement und/oder eine Geschwindigkeitserfassungsvorrichtung für die Fahrzeuggeschwindigkeit in Steuerverbindung, dass das zweite Bedienelement durch das Einschalten einer Zündung des Antriebsmotors, beim Starten des Antriebsmotors und/oder durch das Anfahren des Kraftfahrzeugs aus der Deaktivierungsstellung in die Aktivierungsstellung umschaltbar ist. Zu diesem Zweck kann die Steuereinrichtung einen Eingang für ein dem Startvorgang des Antriebsmotors zugeordnetes Signal aufweisen, wie z.B. für ein Stromversorgungssignal eines Radios und/oder für ein Signal eines S-Kontakts.

Bei einer Weiterbildung der Erfindung weist das Kraftfahrzeug einen Sensor zur Erfassung der Offenstellung eines als Fahrzeugtüre ausgestalteten Fahrzeugteils auf, wobei der Sensor derart mit dem zweiten Bedienelement und der Geschwindigkeitserfassungsvorrichtung in Steuerverbindung steht, dass das zweite Bedienelement durch Fahrzeugstopp aus Fahrt und Öffnen der Fahrzeugtüre aus der Deaktivierungsstellung in die Aktivierungsstellung umschaltbar ist. Durch diese Maßnahme kann ein versehentliches automatisches Verstellen des Fahrzeugteils weitgehend vermieden und dennoch ein relativ hoher Komfort ermöglicht werden.

Vorteilhaft ist, wenn das zweite Bedienelement derart mit dem Näherungssensor in Steuerverbindung steht, dass es zwischen der Deaktivierungsstellung und der Aktivierungsstellung umgeschaltet wird, wenn der Näherungssensor innerhalb eines vorgegebenen Zeitfensters mehrfach ausgelöst wird und/oder für eine vorbestimmte Mindestdauer betätigt wird. Das automatische Betätigen des Fahrzeugteils kann also auch berührungslos deaktiviert werden.

Nachfolgend ist ein Ausführungsbeispiel der Erfindung anhand der Zeichnung näher erläutert. Es zeigt:
- Fig. 1: eine schematische Darstellung eines Kraftfahrzeugs und
- Fig. 2: ein Blockschaltbild.

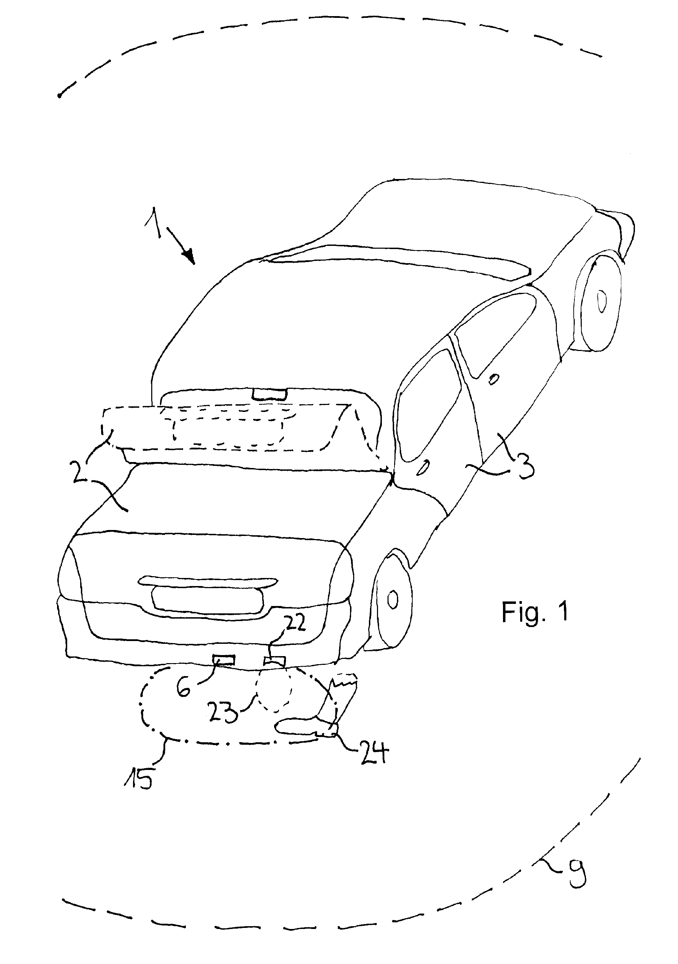

Ein in Fig. 1 im Ganzen mit 1 bezeichnetes Kraftfahrzeug hat ein als Heckklappe ausgestaltetes erstes Fahrzeugteil 2, das zwischen einer Offen- und eine Schließstellung verstellbar ist und einen Zugang zu einem in der Zeichnung nicht näher dargestellten Laderaum ermöglicht. Außerdem weist das Kraftfahrzeug 2 mehrere als Türen ausgestaltete zweite Fahrzeugteile 3 auf, über die der Innenraum des Kraftfahrzeugs 1 zugänglich ist.

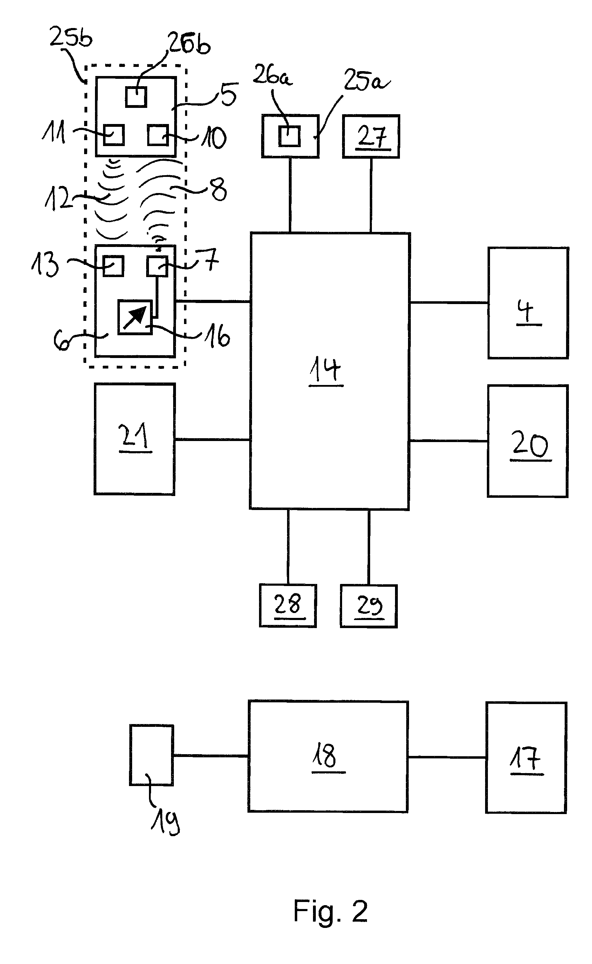

Zum Ver- und Entriegeln der in Schließstellung befindlichen ersten und zweiten Fahrzeugteile 2, 3 hat das Kraftfahrzeug 2 eine in Fig. 2 nur schematisch dargestellte Ent-/Verriegelungseinrichtung 4. Diese weist für jedes zu verriegelnde bzw. entriegelnde Fahrzeugteil 2, 3 jeweils einen Stellmotor auf, mit dessen Hilfe in an sich bekannter Weise ein jeweils an dem betreffenden Fahrzeugteil 2, 3 angeordneter Riegel zwischen einer Verriegelungsstellung und einer Offenstellung motorisch verstellbar ist. Mit Hilfe der Ent-/Verriegelungseinrichtung 4 können die Fahrzeugteile 2, 3 zentral ver- bzw. entriegelt werden.

Das Kraftfahrzeug 1 hat mindestens ein Zugangsberechtigungsmittel 5, das vom Benutzer des Kraftfahrzeugs 1 beispielsweise in der Tasche mitgeführt werden kann. Das Zugangsberechtigungsmittel 5 kann zum Beispiel ein Fahrzeugschlüssel oder eine Keycard sein, der bzw. die drahtlos mit einer im Kraftfahrzeug angeordneten Detektionseinrichtung 6 zusammenwirkt.

Die Detektionseinrichtung 6 hat einen ersten Sender 7 zur Aussendung eines ersten elektromagnetischen Wechselfelds 8. Wenn sich das Zugangsberechtigungsmittel 5 innerhalb eines in Fig. 1 strichliniert dargestellten ersten Umgebungsbereichs 9 der Detektionseinrichtung 6 befindet, empfängt ein in dem Zugangsberechtigungsmittel 5 angeordneter erster Empfänger 10 das erste elektromagnetische Wechselfeld 8. Sobald dieses empfangen wird, sendet ein in das Zugangsberechtigungsmittel 5 integrierter zweiter Sender 11 ein zweites elektromagnetisches Wechselfeld 12 aus, das sich bezüglich seiner Frequenz vorzugsweise von der Frequenz des ersten elektromagnetischen Wechselfelds 8 unterscheidet. Das zweite elektromagnetische Wechselfeld 12 wird von einem in der Detektionseinrichtung 6 angeordneten zweiten Empfänger 13 empfangen, woraufhin diese ein Steuersignal erzeugt, welches die Anwesenheit des Zugangsberechtigungsmittels 5 in dem ersten Umgebungsbereich 9 anzeigt. Befindet sich das Zugangsberechtigungsmittel 5 außerhalb des ersten Umgebungsbereichs 9, empfängt der erste Empfänger 10 das erste elektromagnetische Wechselfeld 9 nicht oder mit zu geringer Signalstärke. In diesem Fall sendet der zweite Sender 11 das zweite elektromagnetische Wechselfeld 12 nicht aus.

Wie in Fig. 2 erkennbar ist, ist die Detektionseinrichtung 6 über eine Steuereinrichtung 14 mit der Ent-/Verriegelungseinrichtung 4 verbunden. Wenn die Detektionseinrichtung 6 feststellt, dass das Zugangsberechtigungsmittel 5 in dem ersten Umgebungsbereich 9 vorhanden ist, übermittelt sie das Steuersignal an die Steuereinrichtung 14. Diese erzeugt dann ein Freigabesignal für das Entriegeln der Ent-/Verriegelungseinrichtung 4. In Abhängigkeit von dem Freigabesignal werden die Stellmotoren der Ent-/Verriegelungseinrichtung 4 positioniert. In Fig. 1 ist erkennbar, dass der erste Umgebungsbereich 9 so groß gewählt ist, dass es das erste Fahrzeugteil 2 und alle zweiten Fahrzeugteile 3 umgrenzt.

Mit Hilfe der Detektionseinrichtung 6 kann außerdem überprüft werden, ob das Zugangsberechtigungsmittel 5 in einem in Fig. 1 strichliniert dargestellten zweiten Umgebungsbereich 15 der Detektionseinrichtung 6 angeordnet ist. Der zweite Umgebungsbereich 15 ist kleiner als der erste Umgebungsbereich 9 und ist vollständig in diesem enthalten. In Fig. 1 ist erkennbar, dass der zweite Umgebungsbereich 15 dicht an dem ersten Fahrzeugteil 2 angeordnet ist. Die Überprüfung, ob das Zugangsberechtigungsmittel 5 in dem zweiten Umgebungsbereich 15 anwesend ist, erfolgt in entsprechender Weise wie die Überprüfung, ob das Zugangsberechtigungsmittel 5 in dem ersten Umgebungsbereich 9 anwesend ist, wobei jedoch bei der zuerst genannten Überprüfung die Sendeleistung des ersten Senders 7 und/oder des zweiten Senders 11 kleiner gewählt wird als bei der zuletzt genannten Überprüfung. Zu diesem Zweck kann die Detektionseinrichtung 6 eine mit dem ersten Senders 7 verbundene Stelleinrichtung 16 zum Verändern der Sendeleistung des ersten Senders 7 aufweisen.

In Fig. 2 ist erkennbar, dass das Kraftfahrzeug 1 einen Antriebsmotor 17, wie z.B. eine Verbrennungskraftmaschine und/oder einen Elektromotor, aufweist. Der Antriebsmotor 17 steht mit einer Motorsteuerung 18 in Steuerverbindung. An der Motorsteuerung 18 können in an sich bekannter Weise Hilfskomponenten, wie z.B. eine Kraftstoffzufuhreinrichtung, eine Zündanlage, eine Autobatterie und/oder ein Anlasser angeschlossen sein, was in der Zeichnung aus Gründen der Übersichtlichkeit nicht näher dargestellt ist. Die Motorsteuerung 18 ist außerdem mit einem ersten Bedienelement 19 verbunden, das an einer Armaturentafel des Kraftfahrzeugs 1 angeordnet ist und einem Fahrer das Starten und/oder Stoppen des Antriebsmotors ermöglicht.

Das erste Fahrzeugteil 2 kann mit Hilfe einer Betätigungseinrichtung 20 automatisch zwischen der Offenstellung und der Schließstellung verschwenkt werden. Damit der Fahrzeugbenutzer seinen Wunsch, das erste Fahrzeugteil 2 zu öffnen und/oder zu schließen, berührungslos an die Betätigungseinrichtung 20 übermitteln kann, hat das Kraftfahrzeug 1 einen Näherungssensor 21, der im Bereich des hinteren Stoßfängers eine Sensoranordnung 22 mit mehreren Sensorelementen aufweist. Mit Hilfe dieser Sensoranordnung 22 wird ein in Fig. 1 punktiert umrandeter Teil des Außenbereichs 23 des Kraftfahrzeugs 1 auf die Anwesenheit eines Körperteils 24, wie z.B. eines Fußes oder Beins, des Fahrzeugbenutzers überwacht. Durch Einbringen des Körperteils 24 in den überwachten Teil des Außenbereichs 23 kann der Näherungssensor 21 betätigt werden.

Zusätzlich zu dem ersten Bedienelement 19 hat das Kraftfahrzeug 1 zweite Bedienelemente 25a, 25b, die in eine Aktivierungs- und eine Deaktivierungsstellung bringbar sind. Jedes Bedienelement 25a, 25b hat jeweils eine Taste 26a, 26b, durch deren Betätigung die zweiten Bedienelemente 25a, 25b zwischen der Aktivierungs- und der Deaktivierungsstellung umschaltbar sind. Eine erste Taste 26a ist an der Armaturentafel und eine zweite Taste 26b an dem Zugangsberechtigungsmittel 5 angeordnet. Während die erste Taste 26a über ein Kabel oder einen elektronischen oder optischen Bus mit der Steuereinrichtung 14 verbunden ist, steht die zweite Taste 26b über den zweiten Sender 11 und den Empfänger 13 drahtlos mit der Steuereinrichtung 14 in Verbindung. Die zweite Taste 26b ermöglicht also eine Fernbedienung der Deaktivierungsfunktion.

Die Steuereinrichtung 14 erzeugt ein das Verstellen des ersten Fahrzeugsteils 2 auslösendes Betätigungssteuersignal, wenn der Näherungssensor 18 die Anwesenheit des Körperteils 21 in dem überwachten Teil des Außenbereichs 20 und die Detektionseinrichtung 6 das Vorhandensein des Zugangsberechtigungsmittels 5 in dem kleineren zweiten Umgebungsbereich 15 detektieren und wenn sich außerdem die zweiten Bedienelemente 25a, 25b in Aktivierungsstellung befinden. Befinden sich dagegen die zweiten Bedienelemente 25a, 25b in der Deaktivierungsstellung, ist das Betätigungssteuersignal gesperrt. Durch das Sperren des Betätigungssteuersignals kann ein unbeabsichtigtes Auslösen des Öffnungs- und/oder Schließvorgangs des zweiten Fahrzeugsteils 3 weitestgehend vermieden werden.

Die zweiten Bedienelemente 25a, 25b stehen derart miteinander in Wirkverbindung, dass sowohl beim Betätigen der ersten Taste 26a auch beim Betätigen der zweiten Taste 26b jeweils beide Bedienelemente 25a, 25b in der Deaktivierungsstellung angeordnet sind.

Mit der Steuereinrichtung 14 ist eine Geschwindigkeitserfassungsvorrichtung 27 zum Ermitteln der Fahrzeuggeschwindigkeit verbunden. Die Geschwindigkeitserfassungsvorrichtung 27 kann einen Raddrehzahlsensor aufweisen. Es ist aber auch denkbar, dass die Geschwindigkeitserfassungsvorrichtung aus in dem Kraftfahrzeug 1 vorhandenen Steuersignalen ein Geschwindigkeitssignal erzeugt.

Zur Erfassung der Offenstellung eines zweiten Fahrzeugteiles 3 hat das Kraftfahrzeug 1 einen mit der Steuereinrichtung 14 verbundenen Sensor 28, der beispielsweise für jedes zweite Fahrzeugteil 3 jeweils einen durch das Öffnen und Schließen des betreffenden zweiten Fahrzeugteils 3 betätigbaren elektrischen Kontakt umfassen kann.

Die Steuereinrichtung 14 ist derart ausgestaltet, dass die zweiten Bedienelemente 25a, 25b durch Fahrzeugstopp aus Fahrt und Öffnen eines zweiten Fahrzeugteils 3 automatisch aus der Deaktivierungsstellung in die Aktivierungsstellung umgeschaltet wird.

Erwähnt werden soll noch, dass zum Überwachen der Schließstellung des ersten Fahrzeugteils 2 ein Positionsgeber 29 vorgesehen ist, der bevorzugt als Schalter ausgestaltet ist. Die Steuereinrichtung 14 steht derart mit dem Positionsgeber 29 und der Betätigungseinrichtung 17 in Steuerverbindung, dass das erste Fahrzeugteil 2 geöffnet wird, wenn es sich beim Auftreten des Betätigungssteuersignals in Schließstellung befindet. Befindet sich das erste Fahrzeugteil 2 beim Auftreten des Betätigungssteuersignals nicht in Schließstellung, wird das erste Fahrzeugteil 2 geschlossen.

### Anmelder: Hella KGaA

- 1: Kraftfahrzeug
- 2: erstes Fahrzeugteil
- 3: zweites Fahrzeugteil
- 4: Ent-/Verriegelungseinrichtung
- 5: Zugangsberechtigungsmittel
- 6: Detektionseinrichtung
- 7: erster Sender (in 6)
- 8: erstes elektromagnetisches Wechselfeld
- 9: erster Umgebungsbereich
- 10: erster Empfänger (in 5)
- 11: zweiter Sender
- 12: zweites elektromagnetisches Wechselfeld
- 13: zweiter Empfänger
- 14: Steuereinrichtung
- 15: zweiter Umgebungsbereich
- 16: Stelleinrichtung
- 17: Antriebsmotor
- 18: Motorsteuerung
- 19: erstes Bedienelement
- 20: Betätigungseinrichtung
- 21: Näherungssensor
- 22: Sensoranordnung
- 23: Teil des Außenbereichs
- 24: Körperteil
- 25a: zweites Bedienelement
- 25b: zweites Bedienelement

## Patentansprüche

1. Kraftfahrzeug (1) mit einem Antriebsmotor (17) und einem Bedienelement (19) zum Starten und/oder Stoppen des Antriebsmotors (17), wie z.B. einem Zündschalter, mit mindestens einem in eine Offen- und eine Schließstellung verstellbaren Fahrzeugteil (2, 3), insbesondere einer Heckklappe und/oder einer Fahrzeugtüre, mit einer Betätigungseinrichtung (20) zum automatischen Verstellen des Fahrzeugteils (2, 3) zwischen der Offen- und der Schließstellung, mit einem Näherungssensor (21), der einen Teil eines Außenbereichs (23) des Kraftfahrzeugs (1) auf die Anwesenheit eines Körperteils (24) eines Benutzers überwacht, und mit einer mit dem Näherungssensor (21) und der Betätigungseinrichtung (20) verbundenen Steuereinrichtung (14), die derart ausgestaltet ist, dass ein das Verstellen des Fahrzeugsteils (2, 3) auslösendes Betätigungssteuersignal erzeugt wird, wenn der Näherungssensor (21) die Anwesenheit des Körperteils (24) in dem Teil des Außenbereichs (23) detektiert, **dadurch gekennzeichnet, dass** das Kraftfahrzeug (1) zusätzlich zu dem ersten Bedienelement (19) mindestens ein zweites Bedienelement (25a, 25b) aufweist, das in eine Aktivierungs- und eine Deaktivierungsstellung bringbar ist, und dass das zweite Bedienelement (25a, 25b) derart mit der Steuereinrichtung (14) in Wirkverbindung steht, dass das Betätigungssteuersignal in der Deaktivierungsstellung gesperrt ist.

2. Kraftfahrzeug (1) nach Anspruch 1, **dadurch gekennzeichnet, dass** das zweite Bedienelement (25a, 25b) im Innenraum des Kraftfahrzeugs (1), vorzugsweise an einem Fahrerplatz angeordnet ist.

3. Kraftfahrzeug (1) nach Anspruch 1 oder 2, **dadurch gekennzeichnet, dass** das zweite Bedienelement (25a, 25b) an einer mobilen Bedieneinheit einer Fernbedienung eine Taste (26b), einen Schalter oder dergleichen Betätigungsteil aufweist, das drahtlos mit der Steuereinrichtung in Übertragungsverbindung steht.

4. Kraftfahrzeug (1) nach einem der Ansprüche 1 bis 3, **dadurch gekennzeichnet, dass** das zweite Bedienelement mindestens zwei Tasten (26a, 26b) aufweist und durch gleichzeitiges Drücken dieser Tasten (26a, 26b) zwischen der Aktivierungsstellung und der Deaktivierungsstellung umschaltbar ist, und dass durch Betätigen jeweils einer dieser Tasten (26a, 26b) eine der betreffenden Taste (26a, 26b) zugeordnete weitere Funktion des Kraftfahrzeugs auslösbar ist.

5. Kraftfahrzeug (1) nach einem der Ansprüche 1 bis 4, **dadurch gekennzeichnet, dass** das in der Aktivierungsstellung befindliche zweite Bedienelement (25a, 25b) **dadurch** zwischen der Aktivierungsstellung und der Deaktivierungsstellung umschaltbar ist, dass eine Taste (26a, 26b) innerhalb eines vorgegebenen Zeitfensters mindestens zwei mal betätigt wird, wobei die Dauer des Zeitfensters insbesondere zwischen 0,3 s und 3 s, gegebenenfalls zwischen 0,3 s und 2 s und bevorzugt zwischen 0,3 s und 1 s beträgt.

6. Kraftfahrzeug (1) nach einem der Ansprüche 1 bis 5, **dadurch gekennzeichnet, dass** das in der Aktivierungsstellung befindliche zweite Bedienelement (25a, 25b) **dadurch** in die Deaktivierungsstellung bringbar ist, dass mindestens eine Taste (26a, 26b) zumindest während einer vorbestimmten Mindestdauer betätigt wird, wobei die Mindestdauer insbesondere 1 s, gegebenenfalls 2 s und bevorzugt 3 s beträgt.

7. Kraftfahrzeug (1) nach einem der Ansprüche 1 bis 6, **dadurch gekennzeichnet, dass** zweite Bedienelement (25a, 25b) einen Zeitgeber aufweist und derart ausgestaltet ist, dass es nach einem manuellen Umschalten in die Deaktivierungsstellung nach einer vorbestimmten Zeitdauer automatisch in die Aktivierungsstellung zurückschaltet.

8. Kraftfahrzeug (1) nach einem der Ansprüche 1 bis 7, **dadurch gekennzeichnet, dass** das zweite Bedienelement (25a, 25b) derart mit dem ersten Bedienelement (19) und/oder eine Geschwindigkeitserfassungsvorrichtung (27) für die Fahrzeuggeschwindigkeit in Steuerverbindung steht, dass das zweite Bedienelement (25a, 25b) durch das Einschalten einer Zündung des Antriebsmotors (17), beim Starten des Antriebsmotors (17) und/oder durch das Anfahren des Kraftfahrzeugs (1) aus der Deaktivierungsstellung in die Aktivierungsstellung umschaltbar ist.

9. Kraftfahrzeug (1) nach einem der Ansprüche 1 bis 8, **dadurch gekennzeichnet, dass** es einen Sensor (28) zur Erfassung der Offenstellung eines als Fahrzeugtüre ausgestalteten Fahrzeugteils (3) aufweist, und dass der Sensor (28) derart mit dem zweiten Bedienelement (25a, 25b) und der Geschwindigkeitserfassungsvorrichtung (27) in Steuerverbindung steht, dass das zweite Bedienelement (25a, 25b) durch Fahrzeugstopp aus Fahrt und Öffnen der Fahrzeugtüre aus der Deaktivierungsstellung in die Aktivierungsstellung umschaltbar ist.

10. Kraftfahrzeug (1) nach einem der Ansprüche 1 bis 9, **dadurch gekennzeichnet, dass** das zweite Bedienelement (25a, 25b) derart mit dem Näherungssensor (21) in Steuerverbindung steht, dass es zwischen der Deaktivierungsstellung und der Aktivierungsstellung umgeschaltet wird, wenn der Näherungssensor (21) innerhalb eines vorgegebenen Zeitfensters mehrfach ausgelöst wird und/oder während einer vorbestimmten Mindestdauer betätigt wird.
